(19) Europäisches Patentamt

European Patent Office

Office européen des brevets

(11) Veröffentlichungsnummer: **0 302 337 B1**

(12) **EUROPÄISCHE PATENTSCHRIFT**

(45) Veröffentlichungstag der Patentschrift: **26.02.92**

(21) Anmeldenummer: **88111932.5**

(22) Anmeldetag: **25.07.88**

(51) Int. Cl.5: **C01B 17/90**, C23G 1/36, C01G 23/053

(54) **Verfahren zum Abtrennen von Metallsulfaten aus Schwefelsäure.**

(30) Priorität: **06.08.87 DE 3726047**

(43) Veröffentlichungstag der Anmeldung:
**08.02.89 Patentblatt 89/06**

(45) Bekanntmachung des Hinweises auf die
Patenterteilung:
**26.02.92 Patentblatt 92/09**

(84) Benannte Vertragsstaaten:
**BE DE ES FR GB IT NL**

(56) Entgegenhaltungen:
**DE-B- 1 173 074**
**DE-B- 3 329 842**
**US-A- 3 816 593**

(73) Patentinhaber: **BAYER AG**

**W-5090 Leverkusen 1 Bayerwerk(DE)**

(72) Erfinder: **Lailach, Günter, Dr.**
**Bismarckstrasse 109**
**W-4150 Krefeld(DE)**
Erfinder: **Gerken, Rudolf, Dr.**
**Ratherstrasse 79**
**W-4150 Krefeld(DE)**
Erfinder: **Rens, Wolfgang**
**Wolferstrasse 18**
**W-4150 Krefeld(DE)**

EP 0 302 337 B1

**Beschreibung**

Die vorliegende Erfindung betrifft ein Verfahren zum Abtrennen von Metallsulfaten aus verdünnter Schwefelsäure durch Eindampfen der Schwefelsäure auf eine Konzentration von 55 bis 75 Gew.-% $H_2SO_4$, Abkühlen der so erhaltenen Lösung oder Suspension und mechanische Abtrennung der festen Metallsulfate und/oder -hydrogensulfate.

Metallsulfathaltige Schwefelsäure fällt bei verschiedenen Prozessen als Abfallprodukt an, z.B. beim Beizen von Metallen oder beim Herstellen von Titandioxid nach dem Sulfatverfahren. Vor allem aus ökologischen Gründen muß versucht werden, die freie Schwefelsäure von den Metallsulfaten zu trennen um sie wieder in den Produktionsprozeß zurückzuführen zu können. Dies geschieht nach dem Stand der Technik durch Eindampfen der schwefelsäurehaltigen Lösungen, in denen Schwefelsäure meistens mit einer Konzentration von 15 - 30 Gew.-% enthalten ist, auf eine Konzentration von ca. 65 % $H_2SO_4$ in der flüssigen Phase (DE-B 1 173 074, EP-A 133 505). Hierbei erfolgt üblicherweise vor der mechanischen Abtrennung der Metallsulfate von der Schwefelsäure eine langsame Abkühlung der Suspension. Gemäß der DE-A 3 329 824 soll durch einen, gegebenenfalls durch Zugabe von Reduktionsmittel erreichten, geringen Fe(III)-Gehalt in der Lösung während der Eindampfung der Dünnsäure eine bessere Abscheidung von Cr-(III)-Ionen aus der Schwefelsäure erreicht werden.

Als problematisch bei der Abtrennung der festen Metallsulfate von der Schwefelsäure erweist sich der Umstand, daß Mg- und insbesondere Al-Sulfate oder -Hydrogensulfate sehr feinteilig kristallisieren und zur Übersättigung in den schwefelsauren Lösungen neigen. Besonders ein hoher Al-Ionengehalt in der sulfathaltigen Schwefelsäure, der sog. Dünnsäure, die bei der Titandioxidherstellung aus Titanschlacke anfällt, bereitet bei der Sulfatabtrennung von der durch Eindampfen der Dünnsäure erzeugten ca. 65 %igen Schwefelsäure große Probleme. Die in der beim Eindampfen und Abkühlen erhaltenen Suspension enthaltenen festen Metallsulfate sedimentieren nur sehr langsam. Die Filtrierbarkeit ist relativ schlecht und der Filterkuchen enthält noch viel anhaftende Schwefelsäure, wodurch die Wirtschaftlichkeit der Rückgewinnungsverfahren beeinträchtigt wird.

Aufgabe der vorliegenden Erfindung ist es somit, ein Verfahren zur Verfügung zu stellen, welches die Nachteile der oben beschriebenen Verfahren nicht aufweist.

Überraschend wurde nun gefunden, daß die Sedimentationsgeschwindigkeit dadurch erhöht und die Filtrierbarkeit dadurch verbessert werden kann, daß der metallsulfathaltigen Schwefelsäure Fe(III)-Ionen zugesetzt werden.

Gegenstand der vorliegenden Erfindung ist somit ein Verfahren zum Abtrennen von Metallsulfaten aus verdünnter Schwefelsäure durch Eindampfen der Schwefelsäure auf eine Konzentration von 55 bis 75 Gew.-% $H_2SO_4$, Abkühlen der so erhaltenen Lösung oder Suspension in einer Rückkaskade und mechanische Abtrennung der festen Metallsulfate und/oder -hydrogensulfate, welches dadurch gekennzeichnet ist, daß vor der Abtrennung der Metallsulfate ein Fe(III)-Gehalt von mindestens 0,01 Gew.-% durch Zusatz von Fe-(III)-Salzen erfolgt und/oder durch Zugabe schwefelsäurelöslicher Fe(III)Verbindungen,vorzugsweise Oxide oder Hydroxide, zum schwefelsäurehaltigen System geschieht.

Es wurde gefunden, daß schon sehr geringe Fe(III)-Mengen einen deutlichen Vorteil erbringen. In einer bevorzugten Ausführungsform des erfindungsgemäßen Verfahrens beträgt der Fe(III)-Gehalt 0,01 bis 1 Gew`-%.

Erfindungsgemäß werden die Fe(III)-Ionen in Form von Fe(III)-Salzen oder -Salzlösungen zugegeben und/oder durch Oxidation von Fe(II)-Ionen in der schwefelsauren Lösung erzeugt und/oder durch Reaktion der Schwefelsäure mit Fe(III)-haltigen Verbindungen, wie z.B. $Fe_2O_3$, $Fe_3O_4$, $FeOOH$, $Fe(OH)_3$, in der Lösung erzeugt. Die erfindungsgemäße Zugabe und/oder Erzeugung der Fe(III)-Ionen erfolgt vor, wahrend oder nach der Eindampfung der metallsulfathaltigen Schwefelsäure.

Durch die erfindungsgemäßen Maßnahmen wird insbesondere der Al-Gehalt der abgetrennten Schwefelsäure durch die erfindungsgemäße Fe(III)-Zugabe verringert.

Von besonderer Bedeutung für die Wiederverwendung der abgetrennten Schwefelsäure bei der Titandioxid-Pigmentherstellung ist aber der Effekt, daß auch der Chromund Vanadingehalt in der Schwefelsäure durch die erfindungsgemäße Fe(III)-Zugabe deutlich verringert wird.

Die Vorteile der Erfindung sollen durch Gegenüberstellung eines Vergleichsbeispieles entsprechend dem Stand der Technik und eines erfindungsgemäßen Beispieles verdeutlicht werden, ohne daß hierin eine Einschränkung zu sehen ist.

Vergleichsbeispiel

Dünnsäure (Zusammensetzung s. Tab. 1) wurde kontinuierlich bei max. 100 ˚C unter Vakuum einge-

EP 0 302 337 B1

dampft. Nachdem die dabei erhaltene Suspension unter Rühren langsam auf 55°C abgekühlt worden war, wurden die Metallsulfate und -hydrogensulfate mittels eines Vakuumtrommelfilters abgetrennt. Dabei bildete sich ein 9 mm dicker, feuchter Filterkuchen.

Tab. 1

| Zusammensetzung der verschiedenen Produkte (Gew.-%) | | | |
|---|---|---|---|
| | Dünnsäure | Filterkuchen | Filtrat |
| $H_2SO_4$ | 26,1 | 17,2 | 65,5 |
| $SO_4^{2-}$ ges. | 34,6 | 63,8 | 69,3 |
| $Fe^{2+}$ | 2,6 | 13,8 | 0,07 |
| $Fe^{3+}$ | < 0,001 | 0,001 | 0,001 |
| $Al^{3+}$ | 0,21 | 0,5 | 0,35 |
| $Mg^{2+}$ | 0,51 | 2,0 | 0,41 |
| $Cr^{3+}$ | 0,029 | 0,1 | 0,03 |
| $V^{4+}$ | 0,058 | 0,3 | 0,004 |

Beispiel

Dünnsäure (Zusammensetzung wie im Vergleichsbeispiel) wurde unter identischen Bedingungen wie im Vergleichsbeispiel eingedampft. Nach dem Eindampfen wurden 0,06 Gew.-% Eisenoxid ($\alpha$-$Fe_2O_3$), entsprechend 0,04 % $Fe^{3+}$, bezogen auf die Suspension, zugegeben und anschließend wie im Vergleichsbeispiel unter Rühren langsam auf 55°C abgekühlt. Die Salze sedimentierten in der gekühlten Suspension deutlich schneller als beim Vergleichsbeispiel. Bei der Filtration wurde unter gleichen Bedingungen ein 13 mm dicker, krümeliger Filterkuchen erzeugt.

Tab. 2

| Zusammensetzung der Produkte (Gew.-%) | | |
|---|---|---|
| | Filterkuchen | Filtrat |
| $H_2SO_4$ | 15,0 | 65,8 |
| $SO_4^{2-}$ ges. | 62,4 | 69,0 |
| $Fe^{2+}$ | 14,1 | 0,07 |
| $Fe^{3+}$ | 0,3 | 0,001 |
| $Al^{3+}$ | 0,7 | 0,25 |
| $Mg^{2+}$ | 2,0 | 0,39 |
| $Cr^{3+}$ | 0,1 | 0,02 |
| $V^{4+}$ | 0,3 | 0,001 |

**Patentansprüche**

1. Verfahren zum Abtrennen von Metallsulfaten aus verdünnter Schwefelsäure durch Eindampfen der Schwefelsäure auf eine Konzentration von 55 bis 75 Gew.-% $H_2SO_4$, Abkühlen der so erhaltenen Lösung oder Suspension in einer Rührkaskade und mechanische Abtrennung der festen Metallsulfate und/oder -hydrogensulfate, dadurch gekennzeichnet, daß vor der Abtrennung der Metallsulfate ein Fe-(III)-Gehalt von mindestens 0,01 Gew.-% durch Zusatz von Fe(III)-Salzen erfolgt und/oder durch Zugabe schwefelsäurelöslicher Fe(III)-Verbindungen, vorzugsweise Oxide oder Hydroxide, zum schwefelsäurehaltigen System geschieht.

2. Verfahren gemäß Anspruch 1, dadurch gekennzeichnet, daß der Fe(III)-Gehalt von 0,01 bis 1 Gew.-% beträgt.

3

**3.** Verfahren gemäß Anspruch 1 oder 2, dadurch gekennzeichnet, daß das Einstellen des Fe(III)-Gehaltes durch Oxidation von Fe(II)-Ionen im schwefelsäurehaltigen System geschieht.

## Claims

**1.** A process for the separation of metal sulfates from dilute sulfuric acid by concentration of the sulfuric acid by evaporation to a concentration of 55 to 75% by weight $H_2SO_4$, cooling of the solution or suspension obtained in a cascade of stirred tanks and mechanical separation of the solid metal sulfates and/or hydrogen sulfates, characterized in that, before separation of the metal sulfates, an Fe(III)content of at least 0.01% by weight is adjusted by addition of Fe(III) salts and/or by addition of Fe(III) compounds soluble in sulfuric acid, preferably oxides or hydroxides, to the system containing sulfuric acid.

**2.** A process as claimed in claim 1, characterized in that the Fe(III) content is from 0.01 to 1% by weight.

**3.** A process as claimed in claim 1 or 2, characterized in that the Fe(III) content is adjusted by oxidation of Fe(II) ions in the system containing sulfuric acid.

## Revendications

**1.** Procédé pour séparer des sulfates métalliques d'acide sulfurique dilué par concentration par évaporation de l'acide sulfurique jusqu'à une concentration de 55 à 75 % en poids de $H_2SO_4$, refroidissement de la solution ou suspension ainsi obtenue dans une cascade équipée d'un agitateur et séparation mécanique des sulfates et/ou des hydrogénosulfates métalliques solides, caractérisé en ce qu'une teneur en Fe(III) d'au moins 0,01 % en poids est établie avant la séparation des sulfates métalliques par addition de sels de Fe(III) et/ou est réalisée par addition de composés de Fe(III) solubles dans l'acide sulfurique, de préférence des oxydes ou des hydroxydes, au système contenant de l'acide sulfurique.

**2.** Procédé suivant la revendication 1, caractérisé en ce que la teneur en Fe(III) s'élève à une valeur de 0,01 à 1 % en poids.

**3.** Procédé suivant la revendication 1 ou 2, caractérisé en ce que la teneur en Fe(III) est ajustée dans le système contenant de l'acide sulfurique par oxydation d'ions Fe(II).

4